Europäisches Patentamt

European Patent Office

Office européen des brevets

(19)

(11) Veröffentlichungsnummer: **0 262 490 B1**

(12) **EUROPÄISCHE PATENTSCHRIFT**

(45) Veröffentlichungstag der Patentschrift: **28.08.91**

(51) Int. Cl.⁵: **B23P 15/00**

(21) Anmeldenummer: 87113309.6

(22) Anmeldetag: **11.09.87**

(54) Verfahren zur Herstellung eines Spritzgiesswerkzeuges.

(30) Priorität: 25.09.86 DE 3632574
24.12.86 DE 3644523

(43) Veröffentlichungstag der Anmeldung:
06.04.88 Patentblatt 88/14

(45) Bekanntmachung des Hinweises auf die
Patenterteilung:
28.08.91 Patentblatt 91/35

(84) Benannte Vertragsstaaten:
AT DE ES FR GB IT NL

(56) Entgegenhaltungen:
EP-A- 0 083 760          EP-A- 0 164 272
EP-A- 0 197 181          DE-A- 2 411 673
DE-B- 1 729 335          FR-A- 2 497 938
FR-A- 2 548 066          US-A- 3 095 604

(73) Patentinhaber: Agfa-Gevaert AG

W-5090 Leverkusen 1(DE)

(72) Erfinder: Peuke, Helmut
Hausnummer 35
W-8301 Hohentann(DE)
Erfinder: Riedel, Gerd, Dipl.-Ing.
Schwingensteinweg 4
W-8000 München 83(DE)
Erfinder: Steinsdorfer, Lothar
Klausenstrasse 10
W-8428 Rohr(DE)

**Beschreibung**

Die Erfindung bezieht sich auf ein Verfahren zur Herstellung eines Heißkanalverteilers für Spritzgießwerkzeuge, in welchem ein Kanalsystem in einer oder in mehreren Ebenen verläuft und die Beheizung über ein Rohrsystem erfolgt, das nach außen weitgehend thermisch isoliert ist, wobei der Heißkanalverteiler aus n übereinanderliegenden Ebenen besteht (n = 1, 2, 3, ..) und ein Verbundkörper aus mindestens n + 1 Platten hergestellt wird, in deren zu verbindende Innenflächen die für den Schmelzendurchfluß bestimmten Kanäle eingearbeitet werden und in deren äußere Flächen Kanäle zum Einlegen von Rohrheizkörpern eingearbeitet werden.

Spritzgießwerkzeuge, beispielsweise für die serienmäßige Verarbeitung thermoplastischer Kuntstoffe, enthalten ein Schmelzleitsystem für den Thermoplast, bestehend aus einem Heißkanalverteiler und einer entsprechenden Anzahl von Heißkanaldüsen, an die sich Werkzeugeinsätze anschließen. Die Heißkanaldüse spritzt den flüssigen Kunststoff unter hohem Druck in die zwischen zwei Platten befindliche Kavität des Werkzeugeinsatzes wo er sich verteilt. Außerdem enthält das Spritzgießwerkzeug ein Temperierkanalsystem in Form von Bohrungen, durch die ein Temperiermedium strömt und so eine möglichst rasche gleichmäßige Abkühlung des Formteils besorgt. Nach dem Erstarren der Formmasse öffnet sich das Spritzgießwerkzeug, das geformte Kunststoffteil wird ausgestoßen oder mittels eines Greifers abgenommen, anschließend wird das Werkzeug wieder geschlossen und der geschilderte Vorgang wiederholt sich.

Heißkanalverteiler werden dann benötigt, wenn entweder mit einem Werkzeug gleichzeitig mehrere Kunststoffteile, beispielsweise Deckel für Filmdosen oder ähnliches, gefertigt werden sollen oder wenn große kompliziert aufgebaute Kunststoffteile gefertigt werden, die aus geometrischen Gründen mehrere Anspritzstellen erforderlich machen.

Wie aus der Monographie Menges/Mohren "Anleitung für den Bau von Spritzgießwerkzeugen" (Hanser-Verlag, München Wien 1983) aus den Seiten 167 - 170 ersichtlich, sollen Heißkanalverteiler in Spritzgießwerkzeugen die Schmelze mit möglichst geringen Druckverlusten isotherm und ohne Schädigung von der Maschinendüse zur Kavität leiten. Alle Durchmesser der Schmelzleitkanäle sind so auszulegen, daß Druckverlust und Verweilzeit möglichst gering sind und daß durch alle Anschnitte gleichzeitig gefüllt wird. Die dabei auftretenden Probleme, die beispielsweise bei einem Heißkanalverteiler mit gebohrten Schmelzenkanälen, die in mehreren Ebenen spinnen- beziehungsweise netzwerkartig angeordnet sein können, entstehen, werden in der angegebenen Literaturstelle diskutiert. Da die Verteilkanäle von außen durch Bohrungen eingebracht werden, die nachträglich verschlossen werden müssen, besteht die Gefahr, daß sich an Ecken, Kanten und Verschlußstopfen Schmelzrückstände bilden, die Fehler des gespritzten Formteils verursachen und deshalb zu Produktionsausschuß führen können.

Die EP-A-0 197 181 beschreibt ein Verfahren zur Herstellung eines Spritzgießverteilers, welcher aus mehreren Platten zusammengesetzt ist, in welche Kanäle zur Aufnahme von Rohrheizkörpern sowie zum Durchfluß der Schmelze eingefräst sind. Dadurch können scharfkantige Umlenkungen und tote Ecken vermieden werden. Der Verteiler wird durch Hartlöten und Verschrauben zusammengesetzt, um die erforderlichen Festigkeiten zu erhalten und gegen Leckage bei den beim Spritzgießen angewendeten hohen Drucken gesichert zu sein. Dies stellt bei Heißkanalverteilern, die aus vielen Teilen zusammengesetzt sind, ein umständliches und teures Verfahren dar.

Zusätzlich muß auch das Problem gelöst werden, die zur Beheizung verwendeten Heizpatronen oder Rohrheizkörper so einzubetten, daß sie möglichst gleichmäßig die Wärmeenergie in den Heißkanalverteiler, aber gleichzeitig auch wenig Energie nach außen abführen.

In der DE-A- 35 23 281 wird ein aus zwei Platten zusammengesetzter Spritzgußverteiler beschrieben, in dessen Außenflächen Heizelemente eingelegt werden und wobei in einem gemeinsamen Erhitzungsschritt eine wärmeleitfähige Kupferlegierung in die Heizkanäle sowie in die Verbindungsfläche zwischen den Platten eingegossen wird, um auf diese Weise eine Hartverlötung zu erreichen. Ein daraus hergestellter Verteiler dürfte bei längerem Gebrauch infolge der permanenten Temperaturschwankungen "weich" werden und dadurch Stabilität verlieren.

Es bestand daher die Aufgabe, ein Verfahren zur Herstellung eines Heißkanalverteilers für Spritzgießwerkezuge zu finden, bei dem

- alle Kanalabschnitte mit hinsichtlich Druckverlust, Verweilzeit und Füllzeit optimalem Durchmesser ausgeführt werden, um die Füllzeit der Anspritzstellen aufeinander abzustimmen

- die Festigkeit durch bessere Verbindung der Platten untereinander auch bei permanenten Temperaturschwankungen erhalten bleibt

- das Heizsystem so eingearbeitet ist, daß der Innenraum des Heißkanalverteilers gleichmäßig beheizt und gleichzeitig wenig Energie nach außen abgegeben wird

- das Eingießen des Materials hoher Wärmeleitfähigkeit und die weitere Bearbeitung des Verbundkörpers so erfolgt, daß keine Dichtigkeitsprobleme auftreten.

Die Aufgabe wurde erfindungsgemäß gelöst mit einem Verfahren mit den im kennzeichnenden Teil der Ansprüche genannten Merkmalen.

Nähere Einzelheiten der Erfindung gehen aus der Beschreibung und den Zeichnungen hervor.

Nachfolgend wird die Erfindung anhand der Zeichnungen näher erläutert und zwar stellt

Figur 1 einen Aufriß einer konventionellen Ausführungsform eines Heißkanalverteilers

Figur 2 einen Querschnitt durch einen Heißkanalverteiler gemäß dem erfindungsgemäßen Verfahren

Figur 3 eine vergrößerte Teilansicht eines Querschnitts durch eine andere Ausführungsform eines Heißkanalverteilers, welcher nach dem erfindungsgemäßen Verfahren hergestellt wurde

Figur 4 ein Temperatur-/Zeitdiagramm für die Bearbeitung des Verbundkörpers gemäß Figur 3

dar.

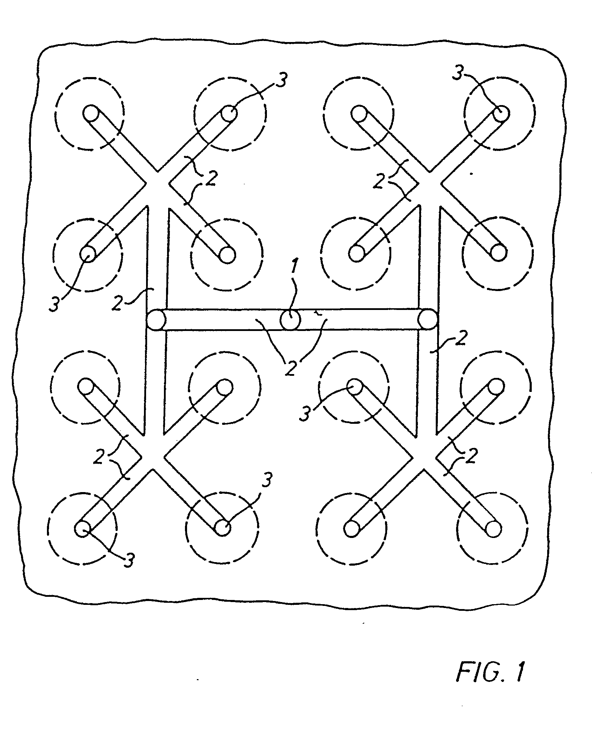

Durch die Düse (1) der Spritzgußmaschine wird der flüssige Kunststoff unter Druck aus einer (nicht gezeichneten) Aufschmelzeinrichtung über ein Verteilsystem (2) in Heißkanaldüsen (3) geleitet, von wo aus die (nicht gezeichnete) Kavität beschickt wird. Besteht die Aufgabe, einen Massenartikel durch Spritzgießen herzustellen, so kann der Heißkanalverteiler den in Figur 1 gezeichneten Aufbau haben, in diesem Fall können sechzehn Artikel gleichzeitig hergestellt werden.

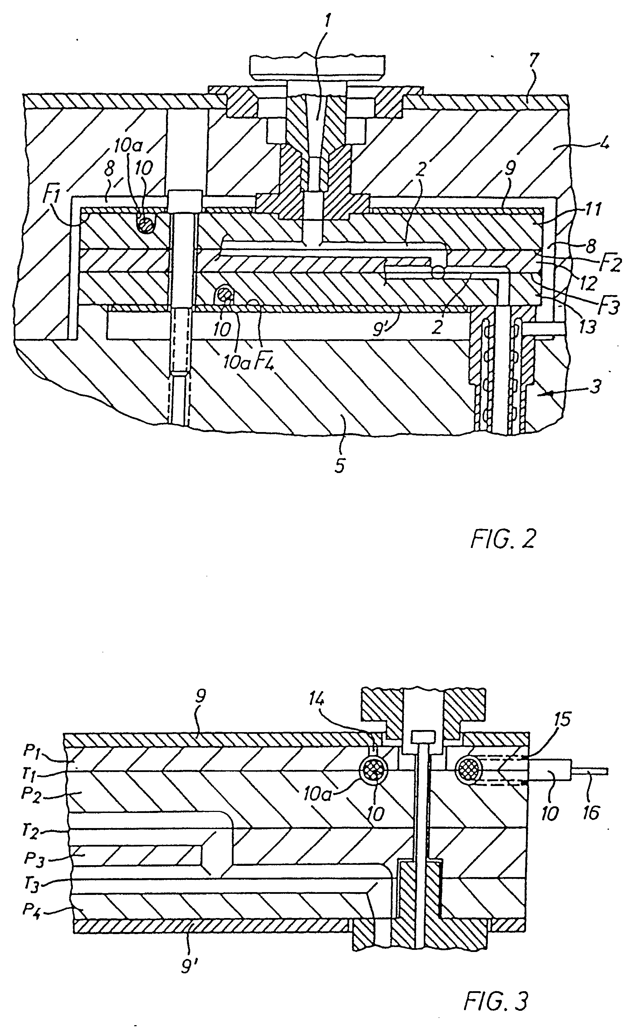

Figur 2 zeigt einen Querschnitt durch ein Spritzgießwerkzeug mit Heißkanalverteiler. Üblicherweise besteht dieses aus einem durch Verschraubung zusammengehaltenen Stahlblock (4, 5), der nach außen mit einer wärmedämmenden Schicht (7) abgedeckt und zum eigentlichen Heißkanalverteiler durch einen Luftspalt (8) abgetrennt sein kann. Der die Heißkanäle (2) beinhaltende Verteiler besteht üblicherweise aus Werkzeugstahl und ist einteilig ausgeführt. Durch entsprechende von außen eingebrachte Bohrungen, die dann durch Stopfen verschlossen werden, wie bereits oben erläutert, werden die Kanäle in ihn eingearbeitet. Nach außen kann er durch aufgeschraubte Aluminiumplatten (9, 9') isoliert ein. Außerdem ist noch ein Heizsystem (10), bestehend beispielsweise aus Rohrheizkörpern oder Heizpatronen, integriert.

Die erfinderische Idee bestand darin, daß als Heißkanalverteiler ein vorzugsweise aus Werkzeugstahl bestehender Verbundkörper hergestellt wird, der sich aus mehreren, mindestens zwei Platten, zusammensetzt. Die Platten (11, 12, 13) sind so dimensioniert, daß die Heißkanäle in die später zu verbindenden Trennflächen (F2, F3) durch Fräsen und Bohren eingearbeitet werden. Anschließend werden die Platten durch Diffusionsschweißen zusammengefügt.

Üblicherweise ist der Heißkanalverteiler in einer Ebene, beispielsweise durch die Fläche (F2) gegeben, angeordnet. Jedoch können bei der Herstellung komplizierter Spritzgießformen oder bei Vorliegen anderer Verteilungsgründe mehrere Verteilebenen (F2, F3) und so weiter, erforderlich sein, im Beispiel der Figur 2 sind zwei Ebenen eingezeichnet. In diesem Fall müssen also drei Platten geschnitten und bearbeitet werden. In jedem Fall wird in der vorstehend geschilderten Weise in jede Einzelplatte lediglich ein Teil des Kanalquerschnittes, beispielsweise die Hälfte, eingearbeitet. Es leuchtet ein, daß auf diese Weise erheblich einfacher die Anzahl, die Verteilung und die Querschnittsform der Heißkanäle gestaltet werden kann, ohne daß Bohrungen nach außen entstehen,

In die Außenflächen (F1, F4) der Platten (11, 13) sind Kanäle (10a) zum Einlegen der Heizkörper (10) eingearbeitet, die in thermodynamisch sinnvoller Weise den Heißkanälen zugeordnet sind. Diese Kanäle können, wie später geschildert, zum Zweck der besseren Wärmeübertragung mit einem Metall guter Wärmeleitfähigkeit, beispielsweise Kupfer oder entsprechende Legierungen, ausgegossen werden. Anschließend an die Außenflächen können Abdeckplatten (9, 9') vorhanden sein.

Nach geeigneter Vorbehandlung der Trennflächen (F1, F2, F3, F4), die weiter unten geschildert wird, werden die einzelnen Platten (9, 11, 12, 13, 9') durch Diffusionsschweißen zusammengefügt.

Das Diffusionsschweißen ist ein für verschiedene Zwecke angewendetes Verfahren, bei dem, wie aus dem "Welding Handbook", 7. Edition, Volume III, Seiten 312 ff., bekannt, die Berührungsflächen ineinander diffundieren. Das heißt, es erfolgt ein Wachsen der Korngrenzen über die Trennflächen hinweg. Die Nahtstelle heilt durch Rekristallisation aus, so daß die 100%ige Festigkeit des Grundwerkstoffs, beispielsweise Werkzeugstahl, erhalten wird. Wie außerdem aus den Veröffentlichungen DE-B- 16 52 878, DE-A- 23 72 774, DE-A- 33 40 235, DE-A- 34 01 670, AT-B- 245 895 sowie den 0 EP-A-0 091 371 und EP-A-0 167 492 bekannt, können gleiche oder auch verschiedene Werkstoffe auf diese Weise miteinander verbunden werden, wie beispielsweise Stahl-Kupfer, Keramik-Niob, oder andere. In den oben erwähnten Schriften wird auch die notwendige Vorbehandlung der zusammenzufügenden Flächen beschrieben.

Die Oberflächen der an den Fügeflächen (F1, F2, F3, F4) zusammenzufügenden Teile wird vorzugsweise auf eine Rauhtiefe Rz < 3 μ abgeschliffen, anschließend werden die Platten mehreren Reinigungsprozessen vorzugsweise bei Ultraschallbeaufschlagung unter Anwendung von Reinigungsmitteln wie Kaltron, Aceton und/oder Ethanol unterzogen. Anschließend werden die Teile zusammengepaßt und in eine Kammer gebracht, die auf einen Restdruck von < 40 Torr, vorzugsweise < 0,01 Torr evakuiert wird. Statt der Evakuierung kann auch, wie in der DE-A-23 42 774 beschrieben, eine Schutzgasatmosphäre angewandt werden. Gleichzeitig werden die zu verschweißenden Werkzeugteile bevorzugt durch induktive Erhitzung gleichmäßig auf eine Temperatur von 900 - 1 100 °C, insbesondere 1 050 °C, erhitzt. Dabei werden die Werkzeugteile hydraulisch unter einem Druck von 10 - 30 N/mm², vorzugsweise 15 N/mm², während einer Zeitdauer von 0,5 - 4 Stunden, vorzugsweise 2 Stunden, zusammengepreßt. Danach wird das Werkzeug langsam abgekühlt, und wenn es bevorzugt etwa 600 - 800 °C erreicht hat, wird der Druck weggenommen und anschließend wird auf Raumtemperatur abgekühlt. In dem so hergestellten Verbundkörper (9, 11, 12, 13, 9') werden anschließend die Kanäle (10a) wie oben geschildert ausgegossen.

In einer Variante des erfindungsgemäßen Verfahrens wird zunächst der Verbundkörper (11, 12, 13) wie oben beschrieben zusammengefügt, anschließend werden die Heizkörper (10) in die Kanäle (10a) eingelegt, ausgegossen und anschließend werden die Platten (9, 9') nach vorheriger Behandlung der Flächen (F1, F4) durch Diffusionsschweißen mit dem Verbundkörper zusammengefügt. In diesem Fall können die Platten auch aus einem anderen Material als der übrige Verbundkörper, beispielsweise Aluminium, bestehen, dabei müssen bei der Durchführung des Diffusionsschweißens die geeigneten Parameter wie Temperatur, Druck und Preßzeit, eingestellt werden.

Der zusammengefügte Heißkanalverteiler kann anschließend beliebig bearbeitet und in den Stahlblock (4, 5) eingebaut werden.

Bei den beschriebenen Verfahren können, falls die äußeren Platten (9, 9') aufgeschraubt werden, Dichtigkeitsprobleme bei der weiteren Bearbeitung des Verbundkörpers auftreten, insbesondere beim Härtevorgang, so daß an den Verbindungsflächen das eingegossene Metall herausfließen kann.

Aus diesem Grund wurde eine Variante des erfindungsgemäßen Spritzgußverteilers entwickelt, bei der die Heizkanäle in das Verteilerinnere verlegt waren, um eine möglichst gleichmäßige Temperaturverteilung im Spritzgußverteiler zu erhalten. Außerdem wurde das Eingießen der Heizkanäle mit dem darauffolgenden Härten des Verteilers zur Erreichung der erforderlichen Stabilität durch entsprechende Behandlung in einem Vakuumofen kombiniert.

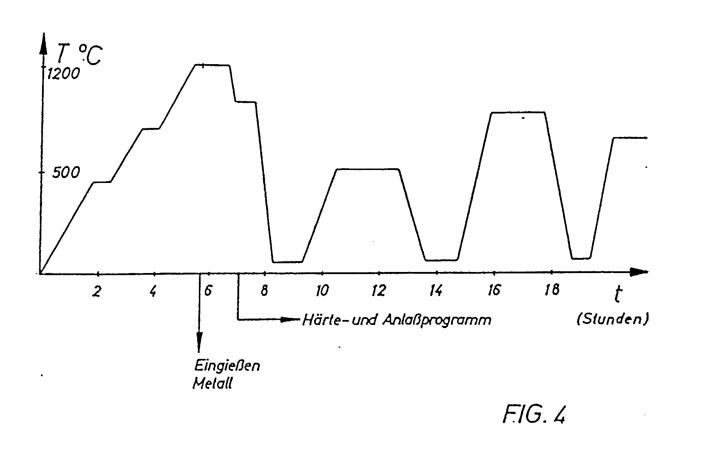

Der nach der Variante des erfindungsgemäßen Verfahrens aufgebaute Heißkanalverteiler ist gemäß Figur 3 aus mehreren aus Warmarbeitsstahl bestehenden Platten P1, P2, P3, P4, mit den Trennflächen T1, T2, T3, aufgebaut. In mindestens eine Trennfläche wird ein Kanalsystem (10a) zur Aufnahme der Rohrheizkörper (10) eingearbeitet, in das anschließend eine Bohrung (14) von außen eingebracht wird. Nach dem Zusammenfügen des die Rohrheizkörper enthaltenden Verbundkörpers durch Diffusionsschweißen werden an den Austrittsstellen (15) der Rohrheizkörper aus dem Verbundkörper, bei denen die elektrische Leitung (16) an die Stromversorgung angeschlossen werden kann, die Kanäle zugeschweißt, oder, wenn niedrigschmelzende Legierungen verwendet werden, durch Wärmeleitzement, beispielsweise Thermon der Firma Prema-Technik/Frankfurt, verschlossen. Daraufhin wird in einen (nicht gezeichneten) Trichter, der mit der Bohrung (14) verbunden ist, ein Metall oder eine Metallegierung hoher Wärmeleitfähigkeit, beispielsweise Kupfer, Berylliumkupfer oder eine Zn-Al-Mg-Cu-Legierung eingelegt. Die gesamte Vorrichtung wird nun in einen Vakuum-Härteofen, welcher bei einem Unterdruck von $10^{-2}$ bis $10^{-3}$ mbar betrieben wird, eingebracht und auf die Schmelztemperatur des Metalls beziehungsweise der Legierung, bei Kupfer also etwa auf 1 100 °C kontinuierlich oder in Stufen aufgeheizt. Dabei fließt das flüssige Metall in das Kanalsystem ein, so daß die Rohrheizkörper mit dem Metall beziehungsweise der Legierung ausgegossen werden. Anschließend wird in dem Ofen der an sich aus dem Stand der Technik bekannte Härtevorgang des Verbundkörpers durchgeführt, indem durch Abblasen mit Stickstoff der Verbundkörper auf ca. 65 °C abgekühlt und nachfolgend nochmals wiederholt auf Temperaturen von 500-600 °C aufgeheizt und wieder abgeblasen wird. Der zeitliche Temperaturverlauf ist in Figur 4 beispielhaft dargestellt.

Abschließend wird der Verbundkörper fertigbearbeitet und nach außen durch wärmeisolierende oder wärmereflektierende Platten (9, 9'), welche beispielsweise durch Aufschrauben angebracht werden, abgedeckt und in das Spritzgießwerkzeug eingebaut.

Wie aus der obigen Beschreibung ersichtlich, bietet das erfindungsgemäße Verfahren zur Herstellung eines Heißkanalverteilers für Spritzgießwerkzeuge folgende Vorteile

- sowohl das Heißkanalsystem wie auch die Heizvorrichtung kann auf einfache Weise in den Kanalverteiler eingearbeitet werden, es können die für eine optimale Verteilung erforderlichen Kanalquerschnitte eingearbeitet werden, besondere Vorteile ergeben sich bei Kanalsystemen in mehreren Ebenen, wie in Figur 2 und 3 dargestellt

- Der nach dem erfindungsgemäßen Verfahren hergestellte Heißkanalverteiler mit dem eingegossenen Rohrheizkörpersystem hat eine homogene Temperaturverteilung.

- Nach dem Diffusionsschweißverfahren kann der Verbundkörper beliebig bearbeitet werden.
- Wird zuerst ein Verbundkörper aus den Platten (11, 12, 13) hergestellt, so kann anschließend an das Diffusionsschweißen das Eingießen ausgehend von den Außenflächen (F1, F4) in die Kanäle erfolgen, worauf die äußeren Platten (9, 9') durch einen weiteren Diffusionsschweißvorgang oder durch Aufschrauben mit dem Verbundkörper zusammengefügt werden.
- Wird der Verbundkörper in einem Arbeitsgang aus den Platten (9, 11, 12, 13, 9') zusammengefügt, so wird anschließend in die Hohlräume (10a) an den Austrittsstellen der Rohrheizkörper das flüssige Metall eingegossen, worauf anschließend die Eingußstelle abgedichtet wird.
- Der Materialfluß im Heißkanalverteiler sowie die Füllzeit der Kavitäten sind besser abgestimmt.

Diese Vorteile, die bei der Herstellung von Massenprodukten wie Filmdosendeckel voll zum Tragen kommen, wiegen bei weitem den Nachteil der Werkstoffvorbereitung für das Diffusionsschweißverfahren und die Kosten für eine Diffusionsschweißapparatur auf.

## Patentansprüche

1. Verfahren zur Herstellung eines Heißkanalverteilers für Spritzgießwerkzeuge, in welchem ein Kanalsystem in einer oder in mehreren Ebenen verläuft und die Beheizung über ein Rohrsystem erfolgt, das nach außen weitgehend thermisch isoliert ist, wobei der Heißkanalverteiler aus n übereinanderliegenden Ebenen besteht (n = 1, 2, 3... ) und ein Verbundkörper aus mindestens n + 1 Platten hergestellt wird, in deren zu verbindende Innenflächen die für den Schmelzendurchfluß bestimmten Kanäle (2) eingearbeitet werden und in deren äußere Flächen Kanäle (10a) zum Einlegen von Rohrheizkörpern (10) eingearbeitet werden, dadurch gekennzeichnet, daß die äußeren Flächen (F1, F4) des Verbundkörpers nach außen durch weitere Platten (9, 9') abdeckbar sind, worauf die zu verbindenden Flächen (F1, F2, F3, F4) von Verunreinigungen befreit und anschließend die Platten durch Diffusionsschweißen zusammengefügt werden.

2. Verfahren nach Anspruch 1, dadurch gekennzeichnet, daß in die Hohlräume (10a) zwischen den Rohrheizkörpern (10) und den äußeren Platten (9, 9') ein Metall oder eine Metallegierung hoher Wärmeleitfähigkeit eingegossen ist.

3. Verfahren nach Anspruch 1, gekennzeichnet durch folgende Verfahrensschritte:
   a) Einarbeiten von Kanälen (10a) in mindestens eine der Trennflächen (T1, T2, T3) des aus Platten (P1, P2, P3, P4) zusammengesetzten Verbundkörpers sowie Einbringen einer Bohrung (14) in mindestens eine der Platten bis zum Kanalsystem (10a).
   b) Einlegen von Rohrheizkörpern (10) in das Kanalsystem (10a)
   c) Zusammenfügen der Platten durch Diffusionsschweißen
   d) Verschließen der Austrittsöffnungen (15) der Rohrheizkörper durch Verschweißen sowie Eingießen eines Materials hoher Wärmeleitfähigkeit durch die Bohrung (14) in das Kanalsystem (10a) des auf die Schmelztemperatur des einzugießenden Materials aufgeheizten Verbundkörpers, welcher mit Unterdruck von $10^{-2}$ bis $10^{-3}$ mbar beaufschlagt wird
   e) Abblasen des Verbundkörpers mit Stickstoff und anschließendes wiederholtes Aufheizen und Abkühlen zur Härtung des Verbundkörpers.

## Claims

1. Method of manufacturing a hot channel manifold for injection moulding tools, in which a channel system runs on one or more than one plane and heating is effected via a tube system, which is substantially thermally insulated with respect to the outside, the hot channel manifold consisting of a number 'n' of planes lying one above another (n = 1, 2, 3 ...), and a compound body is formed of at least n + 1 plates, in whose inner faces to be joined the channels (2) intended for the passage of molten material are formed, and in whose outer faces channels (10a) for the insertion of tube heating bodies (10) are formed, characterised in that the outer faces (F1, F4) of the compound body can be covered on the outside by further plates (9, 9'), whereupon the faces to be joined (F1, F2, F3, F4) are freed of contaminants and then the plates are joined together by diffusion welding.

2. Method according to claim 1, characterised in that a metal or metal alloy with good heat conductivity is poured into the cavities (10a) between the tube heating bodies (10) and the outer plates (9, 9').

3. Method according to claim 1, characterised by the following stages:

    a) the formation of channels (10a) in at least one of the joining faces (T1, T2, T3) of the compound body composed of the plates (P1, P2, P3, P4) and the formation of a bore (14) in at least one of the plates as far as the channel system (10a)

    b) insertion of tube heating bodies (10) into the channel system (10a)

    c) joining of the plates by diffusion welding

    d) sealing of the discharge apertures (15) of the tube heating bodies by welding and pouring in of a material of good heat conductivity through the bore (14) into the channel system (10a) of the compound body, which is heated to the melting temperature of the material to be poured in and which is subjected to low pressure of $10^{-2}$ to $10^{-3}$ mbar

    e) blasting of the compound body with nitrogen followed by repeated heating and cooling in order to harden the compound body.

## Revendications

1. Procédé de fabrication d'un distributeur à canaux chauffants pour moules d'injection, dans lequel un système de canaux se situe dans un ou plusieurs plans et le chauffage s'effectue par un système de canalisations qui est pratiquement isolé thermiquement vis-à-vis de l'extérieur, le distributeur à canaux chauffants se composant de n plans superposés (n = 1, 2, 3 ...) et un corps composite constitué d'au moins n + l plaques étant réalisé, les canaux (2) destinés à l'écoulement de la matière en fusion étant usinés dans les surfaces internes, devant être reliées les unes aux autres, desdites plaques dans les surfaces extérieures desquelles sont usinés des canaux (10a) destinés à la mise en place de corps de chauffe tubulaires (10), caractérisé en ce que les surfaces extérieures (F1, F4) du corps composite sont réalisées de manière à pouvoir être recouvertes extérieurement par d'autres plaques (9, 9') après quoi les surfaces (F1, F2, F3, F4) devant être reliées sont débarrassées des impuretés, puis les plaques sont assemblées par soudage par diffusion.

2. Procédé selon la revendication 1, caractérisé en ce qu'un métal ou un alliage métallique à grande conductibilité thermique est coulé dans les cavités (10a) situées entre les corps de chauffe tubulaires (10) et les plaques extérieures (9, 9').

3. Procédé selon la revendication 1, caractérisé par la séquence d'opérations suivante :

    a) usinage de canaux (10a) dans au moins l'une des surfaces de séparation (T1, T2, T3) du corps composite formé d'un assemblage de plaques (P1, P2, P3, P4) et réalisation d'un trou (14) dans au moins l'une des plaques jusqu'au système de canaux (10a),

    b) mise en place de corps de chauffe tubulaires (10) dans le système de canaux (10a)

    c) assemblage des plaques par soudage par diffusion

    d) obturation des orifices de sortie (15) des corps de chauffe tubulaires par soudage et coulée d'un matériau à grande conductibilité thermique par le trou (14) dans le système de canaux (10a) du corps composite chauffé à la température de fusion de la matière devant être coulée, ce corps composite étant mis en dépression de $10^{-2}$ à $10^{-3}$ mbar

    e) projection d'azote sur le corps composite suivie d'opérations répétées de chauffage et de refroidissement pour la trempe du corps composite.

FIG. 1

FIG. 2

FIG. 3

8

FIG. 4